(19) Europäisches Patentamt
European Patent Office
Office européen des brevets

(11) **EP 2 173 074 A1**

(12) **EUROPEAN PATENT APPLICATION**

(43) Date of publication:
**07.04.2010 Bulletin 2010/14**

(51) Int Cl.:
***H04L 27/26*** *(2006.01)*

(21) Application number: **08165909.6**

(22) Date of filing: **06.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Ali Corporation**
**114, Taipei (TW)**

(72) Inventor: **XU, Bin**
**Shanghai City (CN)**

(74) Representative: **2K Patentanwälte Blasberg Kewitz & Reichel**
**Partnerschaft**
**Corneliusstraße 18**
**60325 Frankfurt am Main (DE)**

Remarks:
Amended claims in accordance with Rule 137(2) EPC.

(54) **Apparatus for doppler frequency estimation for an OFDM receiver**

(57)     The invention provides an apparatus for doppler frequency estimation using Inter Carrier Interference (ICI) calculation. In one embodiment, the apparatus (100) comprises a channel estimation module (102), a channel deviation module (112), a coefficient module (114), a first multiplier (116), and a second multiplier (118). The channel estimation module (102) estimates a channel impulse response according to a received signal. The channel deviation module (112) subtracts the channel impulse response corresponding to a prior symbol from the channel impulse response corresponding to a current symbol to obtain a channel deviation value. The coefficient module (114) provides a predetermined coefficient. The first multiplier (116) multiplies the channel deviation value by the predetermined coefficient to obtain a channel deviation impulse response caused by a Doppler effect. The second multiplier (118) multiplies a recovered signal by the channel deviation impulse response to obtain an inter carrier interference value.

FIG. 1

**Description**

BACKGROUND OF THE INVENTION

FIELD OF THE INVENTION

The invention relates to Orthogonal Frequency Division Modulation (OFDM) system, and more particularly to Doppler frequency shift estimation for an OFDM receiver.

DESCRIPTION OF THE RELATED ART

An OFDM system is a high-speed wireless transmission system and comprises an OFDM transmitter and an OFDM receiver. When an OFDM transmitter transmits an OFDM signal to an OFDM receiver through a wireless channel, the transmitted OFDM signal is vulnerable to a Doppler effect. For example, a Doppler frequency shift of the wireless channel destroys orthogonally between subcarriers of the OFDM signal, thus degrading performance of the OFDM system.

To improve performance of an OFDM system transmitting a signal through a mobile channel, an OFDM receiver of the OFDM system must estimate a Doppler frequency shift of a received signal, and cancel inter carrier interference (ICI) between subcarriers of the received signal according to the estimated Doppler frequency shift. An estimated Doppler frequency shift with higher precision increases accuracy of subsequent received signals decoding.

There are two conventional methods for Doppler frequency shift estimation. The first conventional method estimates a Doppler frequency shift according to a variation rate of amplitudes of pilot signals of the received OFDM signal. The first conventional method, however, is vulnerable to noises and interference and requires a long delay period for averaging an estimate of a Doppler frequency shift. A second conventional method estimates a Doppler frequency shift according to autocorrelation of a received OFDM signal. The autocorrelation process of the second conventional method, however, requires a great amount of computation to generate a Doppler frequency shift estimate. Both conventional methods have disadvantages. Thus, a new method for estimating a Doppler frequency shift for an OFDM receiver is required.

BRIEF SUMMARY OF THE INVENTION

The invention provides an apparatus for Inter Carrier Interference (ICI) calculation for an OFDM receiver. In one embodiment, the apparatus comprises a channel estimation module, a channel deviation module, a coefficient module, a first multiplier, and a second multiplier. The channel estimation module estimates a channel impulse response according to a received signal. The channel deviation module subtracts the channel impulse response corresponding to a prior symbol from the channel impulse response corresponding to a current symbol to obtain a channel deviation value. The coefficient module provides a predetermined coefficient. The first multiplier multiplies the channel deviation value by the predetermined coefficient to obtain a channel deviation impulse response caused by A Doppler effect. The second multiplier multiplies a recovered signal by the channel deviation impulse response to obtain an inter carrier interference value.

The invention also provides an apparatus for Doppler frequency estimation for an OFDM receiver. In one embodiment, the apparatus comprises an inter-carrier-interference average module and a computation module. The inter-carrier-interference average module calculates an average of an absolute value of an inter carrier interference value to obtain an inter-carrier-interference average value. The computation module divides the inter-carrier-interference average value by a predetermined value to obtain a Doppler shift frequency.

A detailed description is given in the following embodiments with reference to the accompanying drawings.

BRIEF DESCRIPTION OF THE DRAWINGS

The invention can be more fully understood by reading the subsequent detailed description and examples with references made to the accompanying drawings, wherein:

Fig. 1 is a block diagram of an apparatus for Doppler frequency estimation for an OFDM receiver according to the invention;

Fig. 2 is a block diagram of an inter-carrier-interference (ICI) average module according to the invention;

Fig. 3 is a block diagram of another embodiment of an apparatus for Doppler frequency estimation for an OFDM receiver according to the invention;

Fig. 4 is a first schematic diagram of a relation between an averaged power of an inter-carrier-interference and a Doppler frequency shift; and

Fig. 5 is a second schematic diagram of a relation between an averaged power of an inter-carrier-interference and a Doppler frequency shift.

DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

A wireless channel of an OFDM system is modeled with the following equation:

$$h(t,\tau) = \sum_{k=1}^{M} \alpha_k e^{j(2\pi f_{d_k} t + \theta_k)} \delta(\tau - \tau_k) \qquad (1),$$

wherein h(t, τ) is a channel impulse response, M is a number of incident paths of a received OFDM signal, k is an index of the incident paths, and $\alpha_k$, $f_{dk}$, $\theta_k$, and $\tau_k$ are respectively an amplitude, a Doppler frequency shift, an original phase, and a channel delay of a k-th incident path. The M incident paths independently vary with time. When the M incident paths linearly vary with time, a received signal is described as the following equation:

$$y_n = \sum_{p=0}^{L-1} h(n,p) x(n-p) + w(n) \qquad (2),$$

wherein x and y are respectively a transmitted signal and a received signal in time domain, L is a total path number of the channel impulse response h, and w is a white noise. When each symbol has a number N of subcarriers, a channel impulse response h is described by the following equation:

$$h(k) = \frac{1}{N} \sum_{n=0}^{N-1} h(n,k) \qquad (3).$$

After an Fast Fourier Transformation (FFT) is performed on the equation (2), an equation (3) can be obtained as following:

$$Y = H_{f1} X + H_{f2} X + W \qquad (4),$$

wherein Y, X, and W are respectively FFT forms of y, x, and w, and a channel impulse response is divided into a static channel impulse response $H_{f1}$ and a channel deviation impulse response $H_{f2}$ caused by Doppler effect:

$$H_{f1} = diag(FFT(h(k))) \qquad (5),$$

$$H_{f2}(n,k) = F H_{t2} F^H = \begin{cases} \dfrac{1}{N} \sum_{m=0}^{L-1} \sum_{r=0}^{N-1} h(r,m) e^{j\frac{2\pi r \cdot (k-n)}{N}} e^{-j\frac{2\pi k m}{N}}, & n \neq k \\ 0 & n = k \end{cases} \qquad (6).$$

A power $P_{IC1}$ of inter carrier interference is in proportion to a square of a Doppler frequency shift $f_d$, as shown in the following equation:

$$P_{ICI} = \frac{\pi^2}{6} f_d{}^2 \qquad (7).$$

Because a product $H_{f2}X$ of the channel deviation impulse response $H_{f2}$ and the signal X is inter carrier interference due to channel variation, the power $P_{ICI}$ of inter carrier interference can be determined according to the channel deviation impulse response $H_{f2}$ and the signal X, and the Doppler frequency shift: $f_d$ can be estimated according to the following equation:

$$| H_{f2}X | = k \cdot f_d \qquad (8),$$

wherein k is a predetermined value.

When a symbol linearly varies with time in a channel, a channel impulse response h can be represented by the following equation:

$$h^p(i) = h^p(\frac{N}{2} - 1) + (i + 1 - \frac{N}{2}) \cdot \alpha^p \qquad (9),$$

wherein 0 i N-1, and $\alpha^p$ is a variation rate of a path with an index p. When the equation (9) is converted from time domain to frequency domain, an equation (10) is obtained as following:

$$H_{f2} = C \cdot H_{slope} = C \cdot (H_{f1}{}^S - H_{f1}{}^{S-1}) = F \cdot diag(i + 1 - N/2) \cdot (H_{f1}{}^S - H_{f1}{}^{S-1}) \qquad (10),$$

wherein F is a matrix of FFT parameters, C is a predetermined coefficient, diag() transforms a vector to a diagonal matrix, N is the number of subcarriers of a symbol, and S is a symbol index.

Thus, a channel deviation impulse response $H_{f2}$ caused by Doppler effect can be derived from variations of static channel impulse response $H_{f1}$ according to the equation (10). A Doppler frequency shift $f_d$ can be further derived from the channel deviation impulse response $H_{f2}$ according to the equation (8).

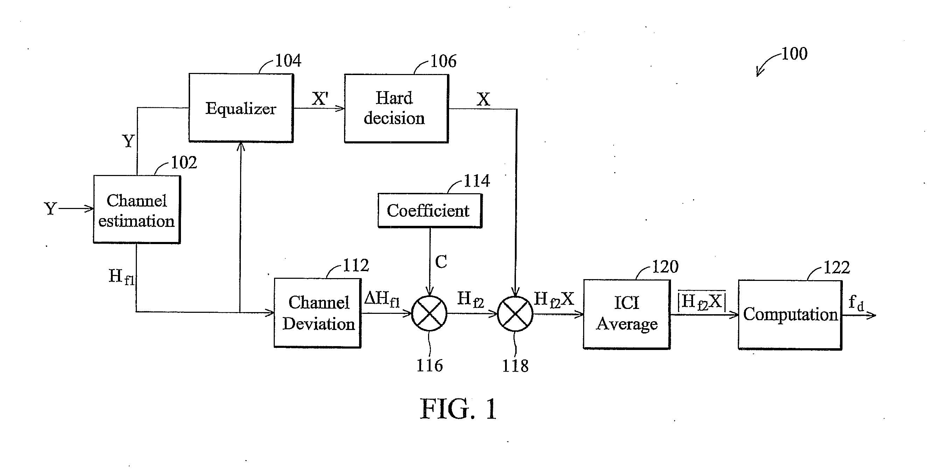

Referring to Fig. 1, a block diagram of an apparatus 100 for Doppler frequency estimation for an OFDM receiver according to the invention is shown. The apparatus 100 comprises a channel estimation module 102, an equalizer 104, a hard decision module 106, a channel deviation module 112, a coefficient module 114, multipliers 116 and 118, an inter-carrier-interference (ICI) average module 120, and a computation module 122. The OFDM receiver first receives an OFDM signal to obtain a received signal Y. The channel estimation module 102 then estimates a channel impulse response $H_{f1}$ according to the received signal Y. The equalizer 104 then equalizes the received signal Y according to the channel impulse response $H_{f1}$ to obtain an equalized signal X'. The hard decision module 106 then performs a hard decision process according to the equalized signal X' to obtain a recovered signal X. In one embodiment, the equalizer equalizes the received signal according to the following algorithm:

$$X = Y / H_{f1} \qquad (11),$$

wherein X is the equalized signal, Y is the received signal, and $H_{f1}$ is the channel impulse response.

The channel deviation module 112 then calculates a channel deviation value $\Delta H_{f1}$ according to the channel impulse response $H_{f1}$ according to the following algorithm:

$$\Delta H_{f1} = H_{f1}^{S} - H_{f1}^{S-1} \qquad (12),$$

wherein S is a symbol index, $H_{f1}^{s}$ is the channel impulse response corresponding to a current symbol, and $H_{f1}^{s-1}$ is the channel impulse response corresponding to a prior symbol. In other words, the channel deviation module 112 subtracts the channel impulse response $H_{f1}^{s-1}$ corresponding to the prior symbol from the channel impulse response $H_{f1}^{s}$ corresponding to the current symbol to obtain the channel deviation value $\Delta H_{f1}$.

The multiplier 116 then multiplies the channel deviation value $\Delta H_{f1}$ by a predetermined coefficient C to obtain a channel deviation impulse response $H_{f2}$ caused by a Doppler effect. The predetermined coefficient C is provided by the coefficient module 114. In one embodiment, the coefficient C is determined according to the following algorithm:

$$C = F \cdot diag(i + 1 - N / 2) \qquad (13),$$

wherein F is a matrix of Fast Fourier Transformation coefficients, diag() is a diagonal matrix, N is the number of subcarriers of a symbol, and i is a natural number ranging between 0 and (N-1).

The multiplier 118 then multiplies the recovered signal X by the channel deviation impulse response $H_{f2}$ to obtain an inter carrier interference value $H_{f2}X$. The ICI average module 120 then calculates an average of an absolute value of the inter carrier interference value $H_{f2}X$ to obtain an inter-carrier-interference average value $\overline{|H_{f2}X|}$. The computation module 122 then divides the inter-carrier-interference average value $\overline{|H_{f2}X|}$ by a predetermined value k to obtain a Doppler shift frequency $f_d$, wherein the predetermined value k is determined according to equation (8). Thus, the Doppler shift frequency $f_d$ is estimated, and the OFDM receiver can remove signal distortion from the received signal Y according to the inter carrier interference value $H_{f2}X$ and the Doppler shift frequency $f_d$.

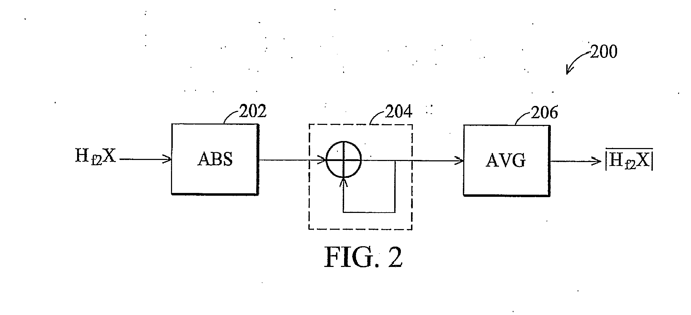

Referring to Fig. 2, a block diagram of an inter-carrier-interference (ICI) average module 200 according to the invention is shown. The ICI average module 200 comprises an absolute module 202, an accumulator 204, and an average module 206. The absolute module 202 first calculates an absolute value of the inter carrier interference value $H_{f2}X$. The accumulator 204 then accumulates a predetermined number N of the absolute values to obtain an accumulation value. The average module 206 then averages the accumulation value to obtain the inter-carrier-interference average value $\overline{|H_{f2}X|}$.

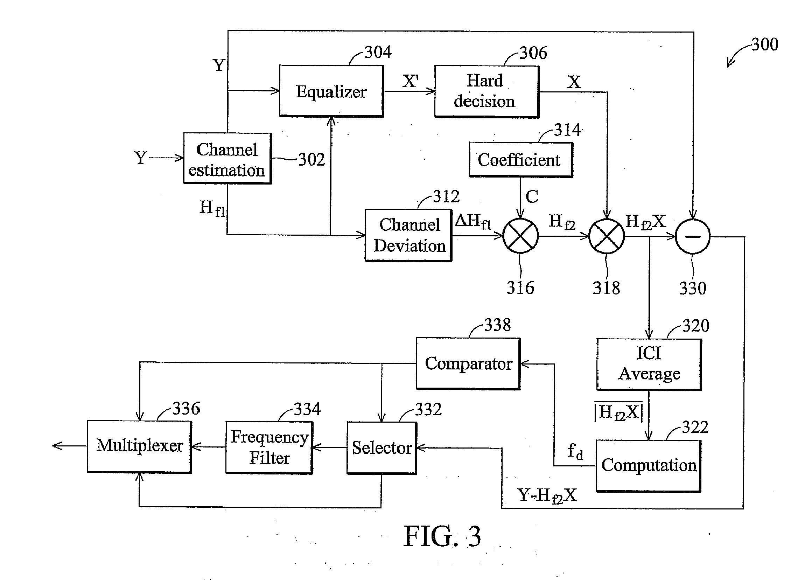

Referring to Fig. 3, a block diagram of another embodiment of an apparatus 300 for Doppler frequency estimation for an OFDM receiver according to the invention is shown. In addition to a plurality of component modules corresponding to those shown in Fig. 1, the apparatus 300 further comprises a subtractor 330, a comparator 338, a selector 332, a frequency filter 334, and a multiplexer 336. The subtractor 330 subtracts the inter carrier interference value $H_{f2}X$ from the received signal Y to obtain an original signal (Y-$H_{f2}X$) without Inter Carrier Interference. The recovered signal (Y-$H_{f2}X$) is then delivered to the selector 332, which determines whether the recovered signal (Y-$H_{f2}X$) requires filtration according to a comparison result of the comparator 338. When the computation module 322 generates the Doppler frequency shift $f_d$, the comparator 338 compares the Doppler shift frequency $f_d$ with a frequency threshold to obtain a comparison result. When the Doppler shift frequency $f_d$ is less than the frequency threshold, the recovered signal (Y-$H_{f2}X$) has small signal distortion due to the Doppler effect, and the selector 332 passes the recovered signal (Y-$H_{f2}X$) directly to the multiplexer 336. Otherwise, the recovered signal (Y-$H_{f2}X$) has great signal distortion due to the Doppler effect, and the selector 332 passes the recovered signal (Y-$H_{f2}X$) to the frequency filter 334. The frequency filter 334 then filters the original signal (Y-$H_{f2}X$) to obtain a filtered signal. The multiplexer 336 then determines whether to output the filtered signal or the original signal to a Viterbi decoder according to the comparison result. When the Doppler shift frequency $f_d$ is greater than the frequency threshold, the multiplexer 336 passes the filtered signal to the Viterbi decoder for further signal decoding.

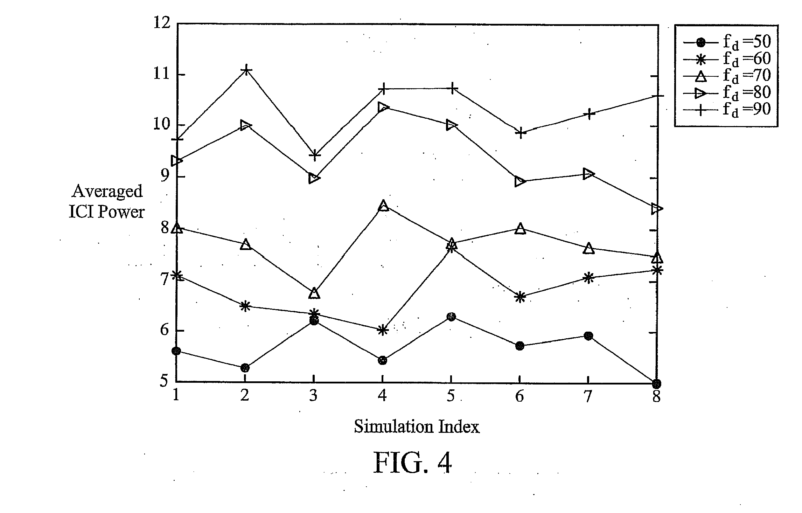

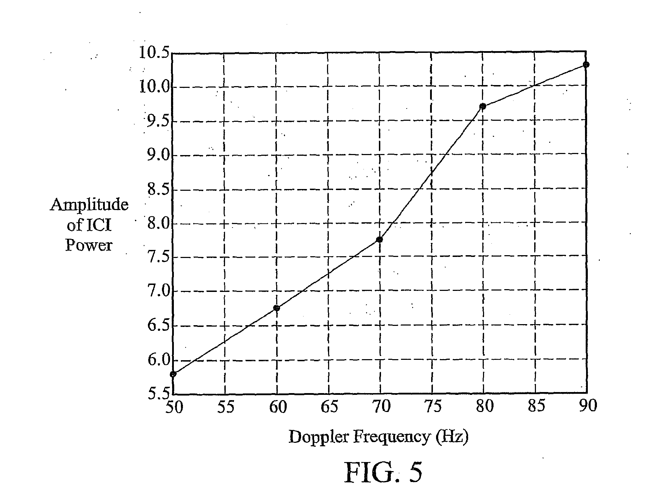

Referring to Fig. 4, a first schematic diagram of a relation between an averaged power of an inter-carrier-interference and a Doppler frequency shift $f_d$ is shown. Eight simulation experiments with simulation indexes 1~8 are performed for measuring the relation between the averaged power of an inter-carrier-interference and the Doppler frequency shift $f_d$. The averaged power of an inter-carrier-interference corresponding to the Doppler frequency shift 50 has a lowest approximate value of 5.5, and the averaged power of an inter-carrier-interference corresponding to the Doppler frequency shift 90 has a highest approximate value of 10.5. Referring to Fig. 5, a second schematic diagram of a relation between an averaged power of an inter-carrier-interference and a Doppler frequency shift $f_d$ is shown. When the Doppler frequency shift $f_d$ is higher, the averaged power of an inter-carrier-interference apparently increase. Thus, there is actually a linear relationship between the Doppler frequency shift $f_d$ and the averaged power of an inter-carrier-interference.

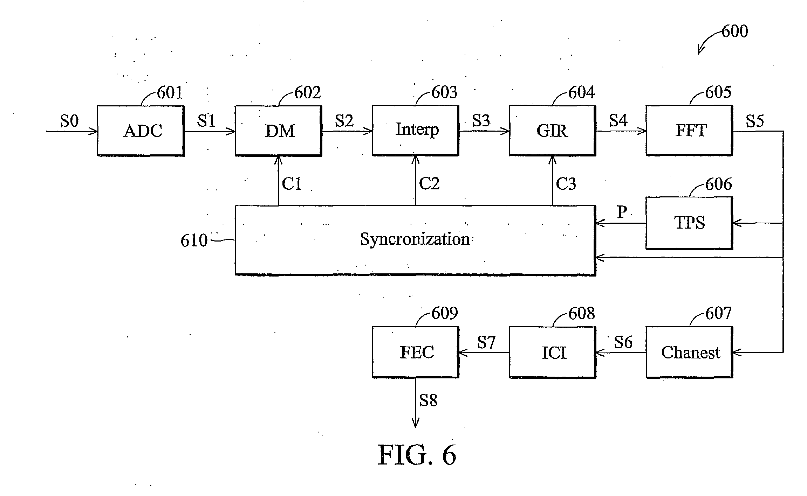

Referring to Fig. 6, a block diagram of an OFDM receiver 600 according to the invention is shown. In one embodiment, the OFDM receiver 600 comprises an analog-to-digital converter (ADC) 601, a down-mixer (DM) module 602, an interpolator 603, a guard interval removing (GIR) module 604, a fast Fourier transformation (FFT) module 605, a transmission parameter signaling (TPS) module 606, a channel estimation module 607, an inter carrier interference (ICI) module 608, a forward error correction (FEC) module 609. The ADC 601 first samples the radio frequency signal S0 to obtain a signal S1. The DM module 602 then transforms the signal S1 to a baseband signal S2. The interpolator 603 then re-samples the baseband signal S2 to obtain a signal S3. The GIR module 604 then removes guard intervals from the signal S3 to obtain a signal S4. The FFT module 605 then performs an FFT operation on the time-domain signal S4 to obtain a frequency-domain signal S5. The TPS module 606 then generates parameters P for synchronization according to the signal S5, and the synchronization module 610 then generates control signals C1, C2, and C3 for synchronization between the DM modules 602, the interpolator 603, and the GIR module 604. The channel estimation module 607 then estimates a channel response S6 according to the signal S5. The ICI module 608 then removes inter carrier interference from the signal S6 to obtain a signal S7. Finally, the FEC module 609 generates a transport stream according to the signal S7. In one embodiment, the ICI module 608 comprises the hard decision module 106, the channel deviation module 112, and the multipliers 116 and 118, and the ICI average module 120 in Fig. 1.

The invention provides an apparatus for Doppler frequency estimation for an OFDM receiver. A channel deviation module of the apparatus first calculates a variation rate $\Delta H_{f1}$ of a channel impulse response $H_{f1}$, and an inter-carrier-interference value $H_{f2}X$ is then calculated according to the variation rate $\Delta H_{f1}$ of a channel impulse response. Finally, a Doppler frequency shift $f_d$ is calculated according to an averaged power of the inter-carrier-interference value $H_{f2}X$. The OFDM receiver can then remove signal distortion from a received signal according to the inter-carrier-interference value $H_{f2}X$ and the Doppler frequency shift $f_d$.

In summary the invention provides an apparatus for Inter Carrier Interference (ICI) calculation. In one embodiment, the apparatus comprises a channel estimation module, a channel deviation module, a coefficient module, a first multiplier, and a second multiplier. The channel estimation module estimates a channel impulse response according to a received signal. The channel deviation module subtracts the channel impulse response corresponding to a prior symbol from the channel impulse response corresponding to a current symbol to obtain a channel deviation value. The coefficient module provides a predetermined coefficient. The first multiplier multiplies the channel deviation value by the predetermined coefficient to obtain a channel deviation impulse response caused by a Doppler effect. The second multiplier multiplies a recovered signal by the channel deviation impulse response to obtain an inter carrier interference value.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An apparatus for inter carrier interference (ICI) calculation for an orthogonal frequency division modulation (OFDM) receiver, comprising:

   a channel estimation module, estimating a channel impulse response according to a received signal;
   a channel deviation module, subtracting the channel impulse response corresponding to a prior symbol from the channel impulse response corresponding to a current symbol to obtain a channel deviation value;
   a coefficient module, providing a predetermined coefficient;
   a first multiplier, multiplying the channel deviation value by the predetermined coefficient to obtain a channel deviation impulse response caused by Doppler effect; and
   a second multiplier, multiplying a recovered signal by the channel deviation impulse response to obtain an inter carrier interference value.

2. The apparatus as claimed in claim 1, wherein the apparatus further comprises:

   an equalizer, equalizing the received signal according to the channel impulse response to obtain an equalized signal; and
   a hard decision module, performing a hard decision process according to the equalized signal to obtain the recovered signal.

3. The apparatus as claimed in claim 1, wherein the channel deviation module calculates the channel deviation value according to the following algorithm:

$$\Delta H_{f1} = H_{f1}^{S} - H_{f1}^{S-1},$$

wherein $\Delta H_{f1}$ is the channel deviation value, $H_{f1}{}^{s}$ is the channel impulse response corresponding to the current symbol, $H_{f2}{}^{s-1}$ is the channel impulse response corresponding to the prior symbol, and S is a symbol index.

4. The apparatus as claimed in claim 1, wherein the coefficient module determines the predetermined coefficient according to the following algorithm:

$$C = F \cdot diag\,(i+1-N/2),$$

wherein C is the predetermined coefficient, F is a matrix of Fast Fourier Transformation coefficients, diag() is a diagonal matrix, N is a number of subcarriers of a symbol, and i is a natural number ranging between 0 and (N-1).

5. The apparatus as claimed in claim 1, wherein the apparatus further comprises a subtractor, subtracting the inter carrier interference value from the received signal to obtain an original signal without inter carrier interference.

6. The apparatus as claimed in claim 5, wherein the apparatus further comprises:

   an inter-carrier-interference average module, calculating an average of an absolute value of the inter carrier interference value to obtain an inter-carrier-interference average value; and
   a computation module, dividing the inter-carrier-interference average value by a predetermined value to obtain a Doppler shift frequency.

7. The apparatus as claimed in claim 6, wherein the apparatus further comprises:

   a comparator, comparing the Doppler shift frequency with a frequency threshold to obtain a comparison result;
   a frequency filter, filtering the original signal to obtain a filtered signal; and
   a multiplexer, determining whether to output the filtered signal or the original signal to a Viterbi decoder according to the comparison result.

8. The apparatus as claimed in claim 1, wherein the equalizer equalizes the received signal according to the following algorithm:

$$X = Y / H_{f1},$$

wherein X is the equalized signal, Y is the received signal, and $H_{f1}$ is the channel impulse response.

9. An apparatus for Doppler frequency estimation for an orthogonal frequency division modulation (OFDM) receiver, comprising:

   an inter-carrier-interference average module, calculating an average of an absolute value of an inter carrier interference value to obtain an inter-carrier-interference average value; and
   a computation module, dividing the inter-carrier-interference average value by a predetermined value to obtain a Doppler shift frequency.

10. The apparatus as claimed in claim 9, wherein the inter-carrier-interference average module comprises:

   an absolute module, calculating the absolute value of the inter carrier interference value;
   an accumulation module, accumulating a predetermined number of the absolute values to obtain an accumulation value; and
   an average module, averaging the accumulation value to obtain the inter-carrier-interference average value.

**11.** The apparatus as claimed in claim 9, wherein the apparatus further comprises:

a comparator, comparing the Doppler shift frequency with a frequency threshold to obtain a comparison result;
a frequency filter, filtering an original signal to obtain a filtered signal; and
a multiplexer, determining whether to output the filtered signal or the original signal to a Viterbi decoder according to the comparison result.

**12.** The apparatus as claimed in claim 9, wherein the apparatus further comprises:

a channel estimation module, estimating a channel impulse response according to a received signal;
a channel deviation module, subtracting the channel impulse response corresponding to a prior symbol from the channel impulse response corresponding to a current symbol to obtain a channel deviation value;
a coefficient module, providing a predetermined coefficient;
a first multiplier, multiplying the channel deviation value by the predetermined coefficient to obtain a channel deviation impulse response caused by A Doppler effect; and
a second multiplier, multiplying a recovered signal by the channel deviation impulse response to obtain the inter carrier interference value.

**13.** The apparatus as claimed in claim 12, wherein the apparatus further comprises:

an equalizer, equalizing the received signal according to the channel impulse response to obtain an equalized signal; and
a hard decision module, performing a hard decision process according to the equalized signal to obtain the recovered signal.

**14.** The apparatus as claimed in claim 12, wherein the apparatus further comprises a subtractor, subtracting the inter carrier interference value from the received signal to obtain the original signal without inter carrier interference.

**15.** An orthogonal frequency division modulation (OFDM) receiver, comprising:

an analog-to-digital converter (ADC), sampling a first signal to obtain a second signal;
an interpolator, re-sampling the second signal to obtain a third signal;
a guard interval removing (GIR) module, removing guard intervals from the third signal to obtain a fourth signal;
a fast fourier transformation (FFT) module, performing an FFT operation on the fourth signal to obtain a fifth signal in frequency domain;
a channel estimation module, estimating a channel impulse response according to the fifth signal to obtain a sixth signal; and
an inter-carrier-interference (ICI) calculation module, removing inter carrier interference from the six signal to obtain a seventh signal;
a transmission parameter signaling (TPS) module, which gets the transmission parameters;
a synchronization module, generating control signals for the interpolator and the GIR; and
a forward error correction (FEC) module, which generating transport stream (TS).

**Amended claims in accordance with Rule 137(2) EPC.**

**1.** An apparatus for Doppler frequency estimation of an orthogonal frequency division modulation (OFDM) receiver, comprising:

a channel estimation module, estimating a channel frequency response according to a received signal;
a channel deviation module, subtracting the channel frequency response corresponding to a prior symbol from the channel frequency response corresponding to a current symbol to obtain a channel deviation value;
a coefficient module, providing a predetermined coefficient;
a first multiplier, multiplying the channel deviation value by the predetermined coefficient to obtain a channel deviation impulse response caused by Doppler effect; and
a second multiplier, multiplying a recovered signal by the channel deviation impulse response to obtain an inter carrier interference value.

**2.** The apparatus as claimed in claim 1, wherein the apparatus further comprises:

an equalizer, equalizing the received signal according to the channel frequency response to obtain an equalized signal; and
a hard decision module, performing a hard decision process according to the equalized signal to obtain the recovered signal.

**3.** The apparatus as claimed in claim 1, wherein the channel deviation module calculates the channel deviation value according to the following algorithm:

$$\Delta H_{f1} = H_{f1}^{S} - H_{f1}^{S-1},$$

wherein $\Delta H_{f1}$ is the channel deviation value, $H_{f1}^{s}$ is the channel frequency response corresponding to the current symbol, $H_{f1}^{s-1}$ is the channel frequency response corresponding to the prior symbol, and S is a symbol index.

**4.** The apparatus as claimed in claim 1, wherein the coefficient module determines the predetermined coefficient according to the following algorithm:

$$C = F \cdot diag\,(i + 1 - N / 2),$$

wherein C is the predetermined coefficient, F is a matrix of Fast Fourier Transformation coefficients, diag() is a diagonal matrix, N is a number of subcarriers of a symbol, and i is a natural number ranging between 0 and (N-1).

**5.** The apparatus as claimed in claim 1, wherein the apparatus further comprises a subtractor, subtracting the inter carrier interference value from the received signal to obtain an original signal without inter carrier interference.

**6.** The apparatus as claimed in claim 5, wherein the apparatus further comprises:

an inter-carrier-interference average module, calculating an average of an absolute value of the inter carrier interference value to obtain an inter-carrier-interference average value; and
a computation module, dividing the inter-carrier-interference average value by a predetermined value to obtain a Doppler shift frequency.

**7.** The apparatus as claimed in claim 6, wherein the apparatus further comprises:

a comparator, comparing the Doppler shift frequency with a frequency threshold to obtain a comparison result;
a frequency filter, filtering the original signal to obtain a filtered signal; and
a multiplexer, determining whether to output the filtered signal or the original signal to a Viterbi decoder according to the comparison result.

**8.** The apparatus as claimed in claim 1, wherein the equalizer equalizes the received signal according to the following algorithm:

$$X = Y / H_{f1},$$

wherein X is the equalized signal, Y is the received signal, and $H_{f1}$ is the channel impulse response.

**9.** An apparatus for Doppler frequency estimation and inter carrier interference (ICI) calculation for an orthogonal frequency division modulation (OFDM) receiver, comprising:

an inter-carrier-interference average module, calculating an average of an absolute value of an inter carrier interference value to obtain an inter-carrier-interference average value; and

a computation module, dividing the inter-carrier-interference average value by a predetermined value to obtain a Doppler shift frequency.

**10.** The apparatus as claimed in claim 9, wherein the inter-carrier-interference average module comprises:

an absolute module, calculating the absolute value of the inter carrier interference value;
an accumulation module, accumulating a predetermined number of the absolute values to obtain an accumulation value; and
an average module, averaging the accumulation value to obtain the inter-carrier-interference average value.

**11.** The apparatus as claimed in claim 9, wherein the apparatus further comprises:

a comparator, comparing the Doppler shift frequency with a frequency threshold to obtain a comparison result;
a frequency filter, filtering an original signal to obtain a filtered signal; and
a multiplexer, determining whether to output the filtered signal or the original signal to a Viterbi decoder according to the comparison result.

**12.** The apparatus as claimed in claim 9, wherein the apparatus further comprises:

a channel estimation module, estimating a channel frequency response according to a received signal;
a channel deviation module, subtracting the channel frequency response corresponding to a prior symbol from the channel frequency response corresponding to a current symbol to obtain a channel deviation value;
a coefficient module, providing a predetermined coefficient;
a first multiplier, multiplying the channel deviation value by the predetermined coefficient to obtain a channel deviation impulse response caused by a Doppler effect; and
a second multiplier, multiplying a recovered signal by the channel deviation impulse response to obtain the inter carrier interference value.

**13.** The apparatus as claimed in claim 12, wherein the apparatus further comprises:

an equalizer, equalizing the received signal according to the channel frequency response to obtain an equalized signal; and
a hard decision module, performing a hard decision process according to the equalized signal to obtain the recovered signal.

**14.** The apparatus as claimed in claim 12, wherein the apparatus further comprises a subtractor, subtracting the inter carrier interference value from the received signal to obtain the original signal without inter carrier interference.

**15.** An orthogonal frequency division modulation (OFDM) receiver, comprising:

an analog-to-digital converter (ADC), sampling a first signal to obtain a second signal;
an interpolator, re-sampling the second signal to obtain a third signal;
a guard interval removing (GIR) module, removing guard intervals from the third signal to obtain a fourth signal;
a fast fourier transformation (FFT) module, performing an FFT operation on the fourth signal to obtain a fifth signal in frequency domain;
a channel estimation module, estimating a channel frequency response according to the fifth signal to obtain a sixth signal; and
an inter-carrier-interference (ICI) calculation module, subtracting the channel frequency response corresponding to a prior symbol from the channel frequency response corresponding to a current symbol to obtain a channel deviation value, multiplying the channel deviation value by a predetermined coefficient to obtain a channel deviation impulse response caused by Doppler effect, multiplying, a recovered signal by the channel deviation impulse response to obtain an inter carrier interference, and (calculating) removing inter carrier interference from the sixth signal to obtain a seventh signal;
a transmission parameter signaling (TPS) module, obtaining the transmission parameters from the fifth signal;
a synchronization module, generating control signals for the interpolator and the GIR; and
a forward error correction (FEC) module, detecting and correcting errors for the seventh signal and then transforming the seventh signal into a transport stream (TS).

**16.** A method for inter carrier interference (ICI) calculation and Doppler frequency estimation for an orthogonal frequency division modulation (OFDM) receiver, comprising:

estimating a channel frequency response according to a received signal;
subtracting the channel frequency response corresponding to a prior symbol from the channel frequency response corresponding to a current symbol to obtain a channel deviation value;
providing a predetermined coefficient;
multiplying the channel deviation value by the predetermined coefficient to obtain a channel deviation impulse response caused by Doppler effect; and
multiplying a recovered signal by the channel deviation impulse response to obtain an inter carrier interference value.

**17.** The method as claimed in claim 16, wherein the method further comprises:

equalizing the received signal according to the channel frequency response to obtain an equalized signal; and
performing a hard decision process according to the equalized signal to obtain the recovered signal.

**18.** The method as claimed in claim 16, wherein the channel deviation value is calculated according to the following algorithm:

$$\Delta H_{f1} = H_{f1}^{S} - H_{f1}^{S-1},$$

wherein $\Delta H_{f1}$ is the channel deviation value, $H_{f1}{}^{s}$ is the channel frequency response corresponding to the current symbol, $H_{f1}{}^{s-1}$ is the channel frequency response corresponding to the prior symbol, and S is a symbol index.

**19.** The method as claimed in claim 1, wherein the predetermined coefficient is determined according to the following algorithm:

$$C = F \cdot diag(i + 1 - N/2),$$

wherein C is the predetermined coefficient, F is a matrix of Fast Fourier Transformation coefficients, diag() is a diagonal matrix, N is a number of subcarriers of a symbol, and i is a natural number ranging between 0 and (N-1).

**20.** The method as claimed in claim 16, wherein the method further comprises subtracting the inter carrier interference value from the received signal to obtain an original signal without inter carrier interference.

**21.** The method as claimed in claim 20, wherein the method further comprises:

calculating an average of an absolute value of the inter carrier interference value to obtain an inter-carrier-interference average value; and
dividing the inter-carrier-interference average value by a predetermined value to obtain a Doppler shift frequency.

**22.** The method as claimed in claim 21, wherein the method further comprises:

comparing the Doppler shift frequency with a frequency threshold to obtain a comparison result;
filtering the original signal to obtain a filtered signal; and
determining whether to output the filtered signal or the original signal to a Viterbi decoder according to the comparison result.

FIG. 1

FIG. 2

FIG. 3

FIG. 4

FIG. 5

EP 2 173 074 A1

FIG. 6

**EUROPEAN SEARCH REPORT**

Application Number

EP 08 16 5909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/117381 A (KONINKL PHILIPS ELECTRONICS NV [NL]; BAGGEN CONSTANT P M J [NL]; HUSEN) 8 December 2005 (2005-12-08) Equation (13) * page 8, line 1 - line 6 * * page 10, line 24 - page 11, line 11 * * figure 4 * ----- | 1-15 | INV. H04L27/26 |
| X | WO 2007/105980 A (INTEL CORP [US]; MALTSEV ALEXANDER ALEXANDROVIC [RU]; PUDEYEV ANDREY V) 20 September 2007 (2007-09-20) | 15 | |
| A | * page 6, line 8 - line 9 * * page 6, line 25 - line 32 * Equation (2) * page 16, line 30 - page 17, line 1 * * page 20, line 20 - line 23 * ----- | 1-14 | |
| A | YUCEK T ET AL: "Doppler spread estimation for wireless OFDM systems" ADVANCES IN WIRED AND WIRELESS COMMUNICATION, 2005 IEEE/SARNOFF SYMPOS IUM ON PRINCETON, NEW JERSEY, USA APRIL 18-19, 2005, PISCATAWAY, NJ, USA,IEEE, 18 April 2005 (2005-04-18), pages 233-236, XP010793787 ISBN: 978-0-7803-8854-3 Equations (6), (8) * page 2, right-hand column, last paragraph * ----- | 1,9,15 | |
| A | US 2006/115011 A1 (TSURUTA MAKOTO [JP] ET AL) 1 June 2006 (2006-06-01) * paragraph [0045] * ----- | 1,9,15 | |

TECHNICAL FIELDS SEARCHED (IPC)

H04L

The present search report has been drawn up for all claims

| Place of search | Date of completion of the search | Examiner |
|---|---|---|
| Berlin | 2 March 2009 | Farese, Luca |

**EP 2 173 074 A1**

## ANNEX TO THE EUROPEAN SEARCH REPORT
## ON EUROPEAN PATENT APPLICATION NO.

EP 08 16 5909

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2009

| Patent document cited in search report | | Publication date | Patent family member(s) | | Publication date |
|---|---|---|---|---|---|
| WO 2005117381 | A | 08-12-2005 | CN | 1961550 A | 09-05-2007 |
| | | | JP | 2008501275 T | 17-01-2008 |
| | | | US | 2007297522 A1 | 27-12-2007 |
| WO 2007105980 | A | 20-09-2007 | EP | 2005683 A1 | 24-12-2008 |
| US 2006115011 | A1 | 01-06-2006 | CN | 1783864 A | 07-06-2006 |
| | | | JP | 2006157663 A | 15-06-2006 |

EPO FORM P0459

For more details about this annex : see Official Journal of the European Patent Office, No. 12/82

19